# EUROPEAN PATENT APPLICATION

(11) **EP 3 742 207 A1**
(43) Date of publication of application: **25.11.2020**
(21) Application number: 19741804.9
(22) Date of filing: 18.01.2019
(51) Int. Cl.: G02B 3/00, B29C 59/02, B44F 1/04, G03B 35/00, G03B 35/24

(54) **THREE-DIMENSIONAL OBJECT**

(30) Priority: 19.01.2018 JP 2018007691
(71) Applicant: FUJIFILM CORPORATION, Minato-ku Tokyo 106-8620 (JP)
(72) Inventor: KIDO, Takeo, Fujinomiya-shi, Shizuoka 418-0044 (JP)
(74) Representative: Hoffmann Eitle
(86) International application number: PCT/JP2019/001434
(87) International publication number: WO 2019/142903

(57) **Abstract**

Provided is a three-dimensional modeled article which imparts a change to the appearance of light and has superior designability.

A decorative member (10) that is a three-dimensional modeled article comprises a sheet (31), a lens part (32), and an image-forming part (33). The sheet (31) has a light-transmitting property and has a first sheet surface (31a) formed as a curved surface. The lens part (32) is provided so as to curve along the first sheet surface (31a). The lens part (32) comprises a plurality of protruding lenses (23) disposed in parallel. The image-forming part (33) comprises an image (37) having a main axis direction (ML). An angle (θ) formed between the main axis direction (ML) and an extension direction (ED) that is a longitudinal direction of the lenses (23) is 0°≤θ≤40° or 50°≤θ≤90°. The curved surface has a first region (AR1) to a third region (AR3) having different normal directions and has a shape in which one of the normal directions of the respective regions is inclined with respect to a plane including the other two normal directions.

## Description

### BACKGROUND OF THE INVENTION

### 1. Field of the Invention

The present invention relates to a three-dimensional modeled article.

### 2. Description of the Related Art

As an article for enhancing or differentiating the designability of the appearances or the like of automobile interiors or electronic goods, there is a decorative film. A number of decorative films are produced by forming a pattern on a film base material by printing or the like, but these decorative films have a limitation on the power of expression, the diversity of expression, and the like.

In order to improve the power of expression or diversify expression, a technique enabling the observation of an image for a variable view (changing image) or an image for a three-dimensional view (three-dimensional image) using a lenticular sheet in which a number of so-called cylindrical lenses having a semicircular columnar shape are arrayed in a direction orthogonal to the extension direction of the cylindrical lenses is known. In this technique, for example, stripe images obtained by dividing a right-view image and a left-view image captured from two (right and left) views in a stripe shape respectively are alternately disposed on the rear surface side, which is the flat lens surface side, of the lenticular sheet, and two adjacent stripe images are positioned on the flat lens surface of one cylindrical lens. In a case where an image for a three-dimensional view is formed, the right eye and the left eye observe the right-view image and the left-view image, between which there is parallax, respectively through the respective cylindrical lenses, whereby a three-dimensional image can be observed. In addition, it is also known that a sense of three-dimensions is further improved by dividing a multi-view image consisting of N (N is 3 or more) view images in a stripe shape and disposing N stripe images in a side-by-side state on the rear of one cylindrical lens (for example, refer to JP2011-154301A). In addition, in a case where an image for a variable view is formed, the pattern being observed is switched by the movement of the observation point, that is, a change in the viewing angle.

As an article that further improves the sense of three-dimensions and/or a decorative effect, a lens-attached printed article obtained by laminating a paper base material or a film base material on a printed-image surface side of a sheet layer comprising a transparent film base material, a lens part consisting of a group of fine lenses arrayed at predetermined pitches on one surface of the transparent film base material, and printed images formed on the other surface such that the lens pitches and the printed-image pitches coincide with each other, through a thermoplastic resin layer is proposed (for example, refer to JP2008-064938A). In this lens-attached printed article, the sheet layer has an uneven structure, and the exposed surface of the paper base material or the film base material is flat.

There is a lenticular sheet formed in a three-dimensional shape, and, for example, a decorative material obtained by shaping a lenticular sheet as a whole in a three-dimensional shape in which one side protrudes and the opposite side is hollowed is proposed (for example, refer to JP2005-131891A). Two sheets of the decorative material are laminated together such that the extension directions of cylindrical lenses become orthogonal to each other, and light-emitting bodies are provided on the hollow side, whereby the decorative material is used in a decorative illumination device. In addition, a three-dimensional lenticular in which a lenticular sheet having a print layer formed on the rear surface is shaped in the same shape as the shape of a part of a toy body and the shaped lenticular sheet is attached to the surface of the part of the toy body is proposed (for example, refer to JP2005-131261A). In this three-dimensional lenticular, the print layer is formed by dividing different pictures at equal intervals respectively and alternately printing the divided pictures in a state of being matched to lenses.

### SUMMARY OF THE INVENTION

However, the techniques in which a lenticular sheet is used that are known by JP2011-154301A or the like and the lens-attached printed article described in JP2008-064938A has a limitation on use and designability due to the flatness of the sheet. In addition, the decorative material of JP2005-131891A exhibits a decorative property due to the hollows and the light-emitting bodies disposed on the hollow side and thus, similarly, has a limitation on use. The three-dimensional lenticular used in a toy body, which is described in JP2005-131261A, has a limitation on use due to its poor accuracy, and there is a demand for improving designability in order to broaden the use.

Therefore, an object of the present invention is to provide a three-dimensional modeled article which has superior designability by imparting a change to the appearance of light.

The present invention comprises a sheet, a lens part, and an image-forming part. The sheet has a sheet surface formed as a curved surface and has a light-transmitting property. The lens part is provided on one sheet surface of the sheet so as to curve along the curved surface and has a plurality of protruding lenses disposed in parallel. The image-forming part is provided on the other sheet surface of the sheet, and an image having directionality in a main axis direction is formed. The curved surface has three regions having different normal directions and has a shape in which one of the normal directions of the respective regions is inclined with respect to a plane including the other two normal directions. A formed angle θ between an extension direction orthogonal to an array direction in which the lenses are arrayed and the main axis direction of the image is 0°≤θ≤40° or 50°≤θ≤90°.

The formed angle θ is preferably 0°≤θ≤40°.

The formed angle θ is more preferably 2°≤θ≤8°.

A minimum value of widths of the lenses is preferably in a range of 0.084 mm or more and 0.3 mm or less.

The minimum value of the widths of the lenses is preferably in a range of 0.127 mm or more and 0.254 mm or less.

A curvature radius of the curved surface is preferably 50 mm or more and 500 mm or less.

The curvature radius of the curved surface is preferably 60 mm or more and 400 mm or less.

The three-dimensional modeled article of the present invention imparts more changes to the appearance of light and is excellent in terms of designability.

### BRIEF DESCRIPTION OF THE DRAWINGS

Fig. 1 is an explanatory view showing a usage aspect of a decorative member to which the present invention is carried out.
Fig. 2 is a cross-sectional schematic view of a dashboard material.
Fig. 3 is an exploded explanatory view for explaining a layer structure of the decorative member.
Fig. 4A is an explanatory view for describing a main axis direction of an image.
Fig. 4B is an explanatory view for describing a main axis direction of an image.
Fig. 4C is an explanatory view for describing a main axis direction of an image.
Fig. 4D is an explanatory view for describing a main axis direction of an image.
Fig. 4E is an explanatory view for describing a main axis direction of an image.
Fig. 4F is an explanatory view for describing a main axis direction of an image.
Fig. 5A is an explanatory view showing specific image depiction regions.
Fig. 5B is an explanatory view showing specific image depiction regions.
Fig. 5C is an explanatory view showing specific image depiction regions.
Fig. 6 is an explanatory view of a sheet surface formed as a curved surface.
Fig. 7 is an explanatory view of the decorative member.
Fig. 8A is an explanatory view of a cross section taken along a line (VIIIa)-(VIIIa) in Fig. 7.
Fig. 8B is an explanatory view of a cross section taken along a line (VIIIb)-(VIIIb) in Fig. 7.
Fig. 9 is an explanatory view of the decorative member.
Fig. 10A is an explanatory view of a lens at a third position.
Fig. 10B is an explanatory view of a lens at a fourth position.
Fig. 11 is a schematic view of a modeled article-producing device.
Fig. 12 is a cross-sectional schematic view of a shaping device.
Fig. 13 is a schematic view of a decorative member.
Fig. 14 is an explanatory view of an image formed on a print layer.
Fig. 15 is a plan view of the decorative member.
Fig. 16 is an explanatory view of a curved surface part of a cross section taken along a line XVI-XVI in Fig. 15.
Fig. 17 is an explanatory view of an image at a point P.
Fig. 18 is an explanatory view of an image at a point Q.
Fig. 19 is an explanatory view of a curved surface part of a cross section taken along a line XIX-XIX in Fig. 15.
Fig. 20 is an explanatory view of the image at the point P.
Fig. 21 is an explanatory view of an image at a point R.

### DESCRIPTION OF THE PREFERRED EMBODIMENTS

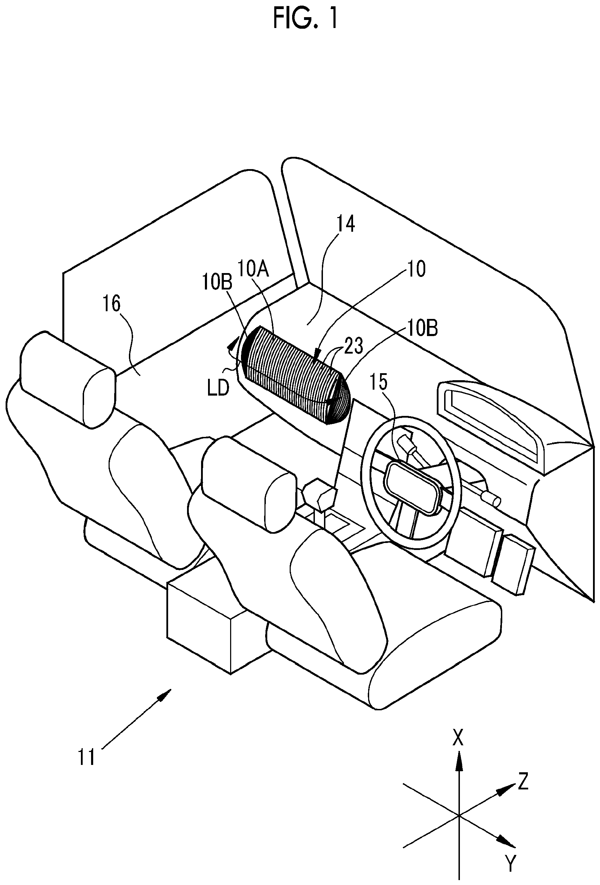

In Fig. 1, a decorative member 10 as an example of a three-dimensional modeled article is a member for changing the appearance of light by refracting light incident on the decorative member 10 from the outside and light reflected at an interface described below in the decorative member 10. Although described below in detail, the decorative member 10 has a curved shape and is used as an interior component of an automobile 11. The decorative member 10 is attached so as to be buried in another interior component and, in this example, is attached as a part of a dashboard 14. The decorative member 10 is a member obtained by integrally forming a front surface part 10A that protrudes toward a facing observer side and has an elliptical arc cross-sectional shape and side surface parts 10B that are disposed on both right and left sides of the front surface part 10A in Fig. 1 and have a spherical shape. As another example of the three-dimensional modeled article, a decorative member that has a different curved shape from the decorative member 10 and is attached, for example, as a part of a steering wheel 15 or a door panel 16 is exemplified. In addition, the three-dimensional modeled article is not limited to interior components of automobiles and may be, for example, a home appliance, a suitcase, a toy, or the like. In Fig. 1, an arrow X means the vertical direction, an arrow Y indicates a right and left direction in the case of seeing a windshield (a front-side window of the automobile, windshield or windscreen) from the inside of the automobile 11, and an arrow Z means a forward direction, respectively.

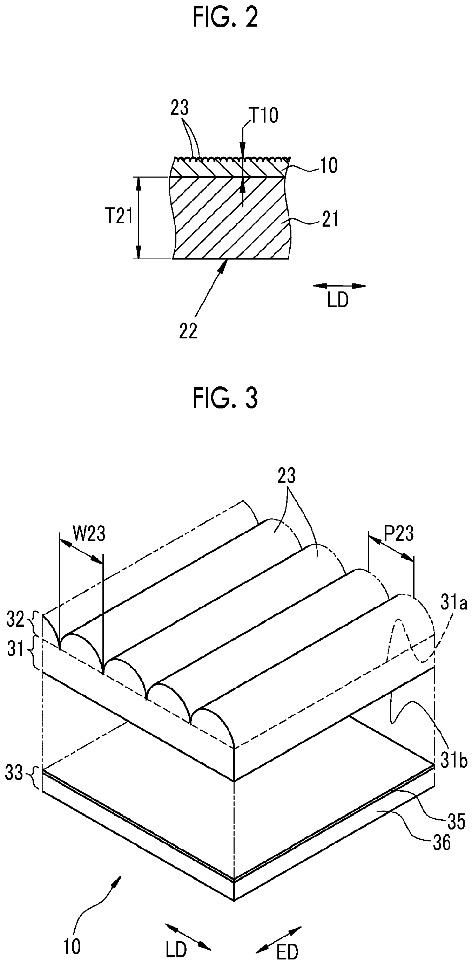

As shown in Fig. 2, the decorative member 10 is provided in a state of being laminated on a dashboard material main body 21, and the dashboard material main body 21 and the decorative member 10 constitute a dashboard material 22. The decorative member 10 is disposed so as to cover an observer-side surface of the dashboard material main body 21. The dashboard material main body 21 is a forming member for forming the dashboard 14, has impact resistance, stiffness, heat resistance, and the like for functioning as the dashboard 14, and is formed of plastic. As the plastic forming the dashboard material main body 21, for example, a variety of well-known plastics such as an alloy (blend) of polycarbonate (hereinafter, referred to as PC) and an acrylonitrile butadiene styrene copolymer (hereinafter, referred to as ABS) and acrylonitrile styrene glass fiber can be used, and, in the present embodiment, an alloy (blend) of PC and ABS is used. The acrylonitrile styrene glass fiber refers to an acrylonitrile styrene copolymer containing a glass fiber and is a so-called composite material of an acrylonitrile styrene copolymer and a glass fiber. In this example, a thickness T21 of the dashboard material main body 21 is set to approximately 3 mm, but is not limited thereto, and may be appropriately set depending on the intended function and the material of the dashboard 14.

In this example, the decorative member 10 is provided in a state of being closely attached to the dashboard material main body 21, but may be provided with a gap therebetween. The decorative member 10 has a plurality of protruding lenses 23 on one surface. In Fig. 2, the respective lenses 23 are drawn to extend in a paper depth direction. The decorative member 10 is disposed in a state in which the respective lenses 23 face the observer side and the opposite-side surface faces the dashboard material main body 21 side. Therefore, in Fig. 1, an observer observes the lenses 23. The decorative member 10 is formed in a thin sheet shape, and a thickness T10 of the decorative member 10 is preferably 0.06 mm or more and 5 mm or less and more preferably 0.1 mm or more and 0.5 mm or less. In this example, the thickness T10 is in the above-described range, but differs depending on positions. However, the thickness T10 may also be constant.

As shown in Fig. 3, the decorative member 10 comprises a sheet 31, a lens part 32, and an image-forming part 33. In this example, the sheet 31 is transparent, but does not need to be transparent at all times, and simply needs to have a light-transmitting property, that is, light transmittance. Here, the light refers to visible light (a region having a wavelength in a range of approximately 380 nm or more and 750 nm or less). The expression "having a light-transmitting property" refers to both being transparent and being translucent. The expression "being transparent" means a property in a state in which, regarding a property of transmitting light, the transmittance is extremely high and a side beyond the sheet 31 is clearly visible through the sheet 31. The expression "being translucent" refers to a property in a state in which, although the sheet has a light-transmitting property, but the transmitted light is diffused or the transmittance is low, and thus, unlike "being transparent", a shape or the like on the side beyond the sheet 31 cannot be clearly recognized or cannot be recognized through the sheet 31. In Fig. 3, for the convenience of description, both sheet surfaces of the sheet 31 are drawn as a plane, but the sheet 31 has sheet surfaces formed as a curved surface. The detail of the shape of the curved surface will be described below using a separate drawing.

The sheet 31 is formed of a thermoplastic resin, the thermoplastic resin is preferably polyethylene terephthalate (hereinafter, referred to as PET), PC, triacetyl cellulose (hereinafter, referred to as TAC), acryl, ABS, or the like and, among these, more preferably PC or acryl, and, in the present embodiment, PC is used. In addition, the sheet 31 may include a refractive index adjuster, zinc oxide (ZnO), titanium oxide (TiO₂), or the like in addition to the thermoplastic resin.

The decorative member 10 does not need to comprise the sheet 31, but preferably comprises the sheet. The thickness of the decorative member 10 is adjusted by providing the sheet 31 and adjusting the thickness of the sheet 31, and thus it is possible to adjust the optical path length.

The lens part 32 is provided on one sheet surface (hereinafter, referred to as the first sheet surface) 31a of the sheet 31 and curves along the curved surface of the first sheet surface 31a. The lens part 32 is constituted of the plurality of protruding lenses 23 as described above, and each lens 23 has a columnar shape. The plurality of lenses 23 is arrayed side by side, that is, disposed in parallel in a direction orthogonal to a direction in which the protruding lenses 23 extend (hereinafter, referred to as the extension direction) in a state in which the lenses are in contact with each other. A reference sign ED in the respective drawings indicates the extension direction of the lens 23, and a reference sign LD indicates the array direction of the plurality of lenses 23. The lens part 32 is transparent. In a case where the lens part 32 and the sheet 31 are both transparent as in the present embodiment, the boundary therebetween is not viewable; however, in Fig. 3, for the convenience of description, the boundary is indicated by a dotted line. The boundary between the lens part 32 and the sheet 31 is a surface obtained by connecting individual trough parts formed between adjacent lenses 23 in Fig. 3.

As the lens 23, a cylindrical lens is used. However, the cylindrical lens mentioned herein is not limited to a case where the cross-sectional shape is strictly a semicircular column, that is, the cross-sectional shape of the protruding lens surface (hereinafter, referred to as the first lens surface) is an arc and also refers to a lens in which the cross-sectional shape of the first lens surface is a parabola, an elliptical arc, or a different protruding curve. In this example, although the detail will be described below using a separate drawing, the lenses 23 having mutually different cross-sectional shapes in the first lens surface are present in a mixed form. In addition, the lens 23 is not limited to the cylindrical lens and may be, for example, a prism.

The minimum value of widths W23 of the lenses 23 is preferably in a range of 0.084 mm or more and 0.3 mm or less. The width W23 of the lens 23 is the dimension of the lens 23 in the array direction LD of the plurality of lenses 23 as shown in Fig. 3. In a case where the widths of the lenses 23 are not uniform, the minimum value of the widths W23 of the lenses 23 is the smallest value of the widths of the lenses 23 in the decorative member 10.

In a case where the minimum value of the widths W23 of the lenses 23 is below the above-described range, there is a case where a problem of the amount of the position of an image being viewed (the position of an image being viewed through the lenses 23) changed relative to the amount of the observation point moved becoming too large, that is, a problem of an effect obtained from the lenses 23 becoming excessive is caused, and, in this case, colors or patterns are mixed together, and the image flickers when viewed, which degrades the designability. In addition, in a case where the minimum value of the widths W23 of the lenses 23 is above the above-described range, there is a case where a problem of the amount of the position of an image being viewed changed relative to the amount of the observation point moved becoming too small, that is, a problem of an effect obtained from the lenses 23 being degraded is caused. In addition, there is a case where the convex shape of the lens 23 is viewed. In addition, in such a case, the designability degrades.

In contrast, in a case where the minimum value of the widths W23 of the lenses 23 is in the above-described range, there is no case where the convex shape of the lens 23 is viewed. In addition, it becomes possible to exhibit the effect obtained from the lenses 23 to an appropriate extent, and it is possible to improve the designability.

The width W23 of the lens 23 is more preferably in a range of 0.127 mm or more and 0.254 mm or less. In a case where the minimum value of the widths W23 of the lenses 23 is in this range, the above-described effect becomes more significant.

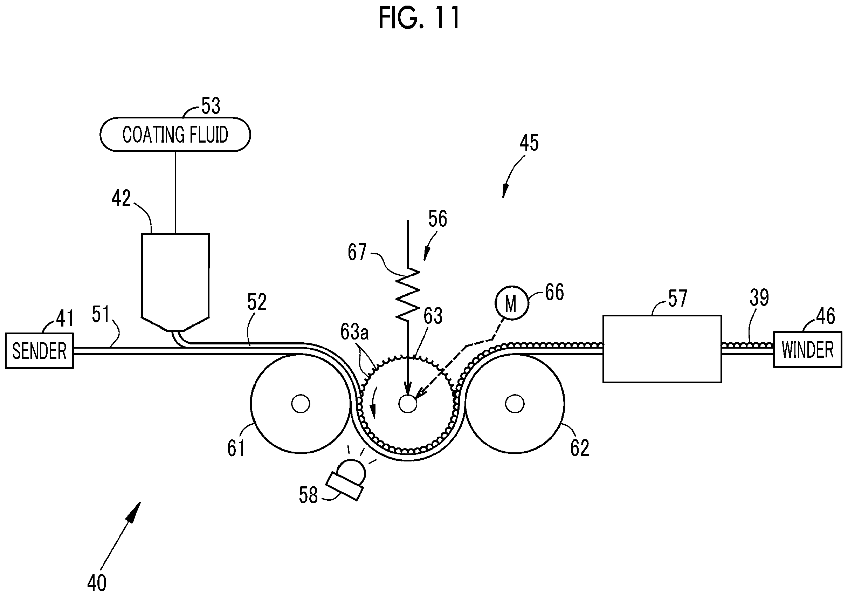

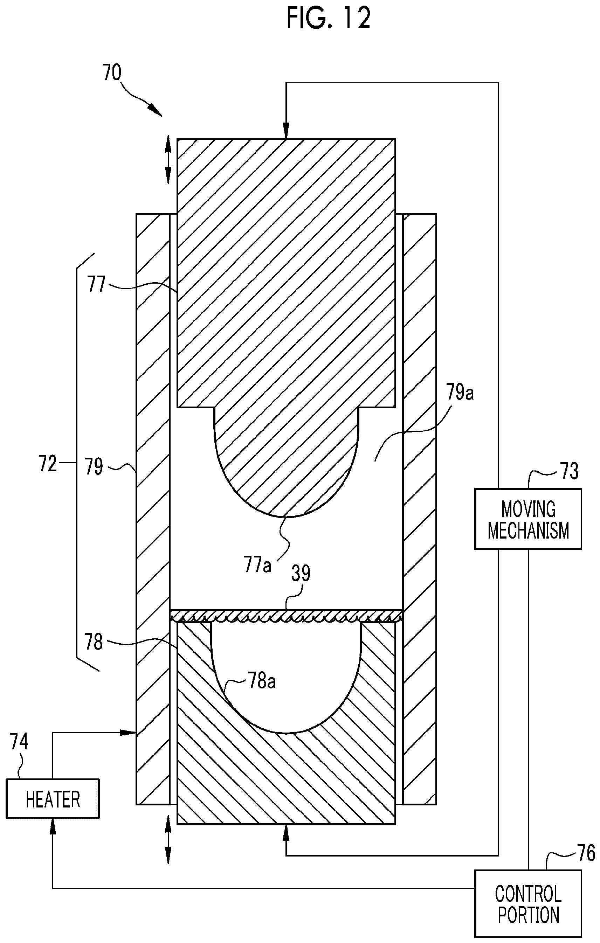

Here, the decorative member 10 is made by shaping a modeled article 39 (refer to Fig. 11 and Fig. 12) as described below, and the lenses 23 in the decorative member 10 are lenses in the modeled article 39 in a deformed aspect. In the modeled article 39 being used, the pitch between the lenses is in a range of 80 LPI (line per inch) or more and 3,000 LPI or less. In the present embodiment, the decorative member 10 is made using individual modeled articles 39 having a pitch between the lenses of 80 LPI, 100 LPI, 200 LPI, or 300 LPI. In addition, the modeled article 39 used is a modeled article in which lenses are tightly arrayed at the above-described pitches. That is, in a case where the pitch between the lenses is converted to a length in the modeled article 39, this length becomes equal to the width of the lens. Similarly, in a case where a pitch P23 (refer to Fig. 3) between the lenses is converted to a length in the decorative member 10, this length becomes equal to the width W23 of the lens 23.

As described above, in the present embodiment, the decorative member 10 is made using individual modeled articles 39 having a pitch between the lenses of 80 LPI, 100 LPI, 200 LPI, or 300 LPI, and, in this case, the widths W23 of the lenses 23 in a part that is not deformed by shaping become 0.317 mm, 0.254 mm, 0.127 mm, and 0.084 mm respectively. The above-described range of the minimum value of the widths W23 of the lenses 23 is a range specified as described above.

In addition, the more significantly deformed is a part in which the lenses 23 are present in the array direction LD of the plurality of lenses 23 by shaping, the larger the width W23 becomes. For example, in a case where the stretching percentage of a part most stretched in the array direction LD is 100%, in the case of respectively using the modeled articles 39 having the respective pitches described above, the width W23 of the lens 23 in the part of the decorative members 10 most stretched in the array direction LD becomes 0.634 mm, 0.508 mm, 0.254 mm, or 0.168 mm respectively. The stretching percentage refers to a percentage obtained from {(LY-LX)/LX}×100 in which the dimension of a specific place in the modeled article 39 is represented by LX and the dimension of a part corresponding to the specific place of the modeled article 39 in the decorative member 10 obtained by shaping is represented by LY.

The lens part 32 includes a thermosetting polymer. The thermosetting polymer is a polymer generated by heating a thermosetting compound. The thermosetting compound is a compound that cures by heating. The lens part 32 may include a photocurable polymer. The photocurable polymer is a polymer generated by irradiating a photocurable compound with light. The photocurable compound is a compound that cures by being irradiated with light. The lens part 32 of the present embodiment includes a curing product of tricyclodecane dimethanol diacrylate (hereinafter, referred to as ADCP). The sheet 31 also may include these thermosetting polymer and/or photocurable polymer.

The image-forming part 33 is an image display body viewed in the case of observing the decorative member 10 from the lens part 32 side. The image-forming part 33 is provided on a second sheet surface 31b of the sheet 31 in, in this example, a layer shape in a state of being curved along the curved surface of the second sheet surface 31b. The image-forming part 33 comprises a print layer 35 in which the image 37 is formed (drawn) by printing and a support 36 provided with the print layer 35. The print layer 35 is in contact with the second sheet surface 31b.

In this example, the image-forming part 33 having the print layer 35 provided on the support 36 is disposed on the second sheet surface 31b, but the constitution is not limited to this aspect. For example, an image-forming part only consisting of the print layer 35 may be provided on the second sheet surface 31b.

In addition, in this example, an example in which the image 37 is formed by printing has been described, but the image 37 may be formed by a method different from printing such as transferring.

Furthermore, as a material forming the image 37, a variety of well-known materials such as a paint called a pigment or a dye can be used. However, in a case where the sheet 31 is formed of PET, PC, or TAC described above, the print layer 35 is preferably formed on the sheet 31 using a pigment.

As the image 37 formed on the print layer 35, an image in which, in a plane state, any of straight lines parallel to this plane can be recognized as the direction of the image is used. The image 37 in a plane state refers to a state in which the modeled article 39 before being shaped as the decorative member 10 is, for example, placed or the like on a horizontal surface, thereby being made into a plane. In addition, hereinafter, a direction that can be recognized as the direction of an image is regarded as a main axis direction (main axis direction of the image) and is given a reference sign ML in description.

The kind of the image and the main axis direction ML of the image will be described by exemplifying a specific example.

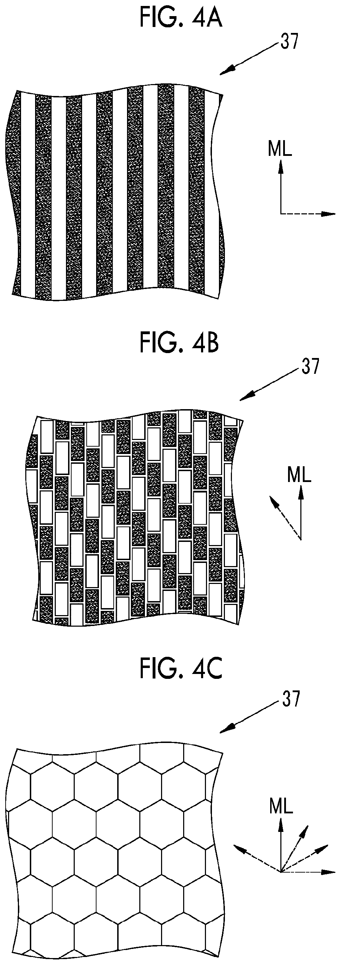

In a case where the image 37 is a stripe pattern as shown in Fig. 4A, in the present embodiment, the longitudinal direction (a direction indicated by a solid line arrow in Fig. 4A) of a plurality of striped regions constituting the stripe pattern is regarded as the main axis direction ML of the image 37. The width direction (a direction indicated by a broken line arrow in Fig. 4A) of the plurality of striped regions constituting the stripe pattern may be regarded as the main axis direction ML of the image 37.

In a case where the image 37 is a carbon pattern as shown in Fig. 4B, in the present embodiment, the longitudinal direction (a direction indicated by a solid line arrow in Fig. 4B) of a plurality of rectangles (white or black rectangles) constituting the carbon pattern is regarded as the main axis direction ML A direction in which rectangles having the same color are arrayed (a direction indicated by a broken line arrow in Fig. 4B) may be regarded as the main axis direction ML.

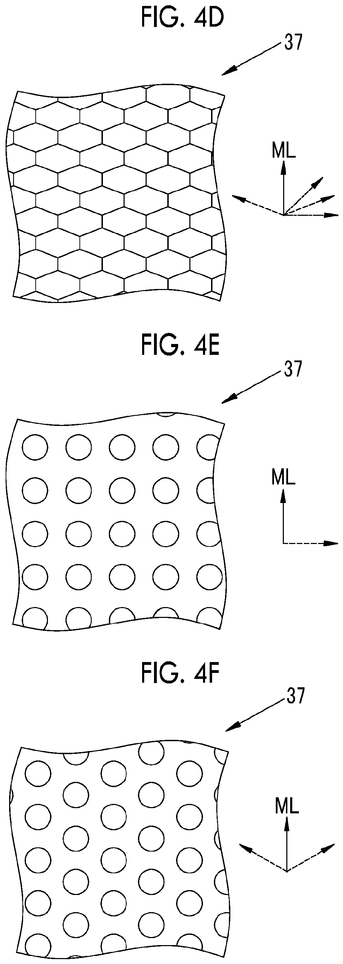

In addition, in a case where the image 37 is a honeycomb pattern as shown in Fig. 4C or Fig. 4D, in the present embodiment, the vertical direction of the drawing (one of three directions parallel to the sides of a hexagon constituting the honeycomb pattern and indicated by a solid line arrow in Fig. 4C or Fig. 4D) is regarded as the main axis direction ML A direction indicated by a broken line arrow in Fig. 4C or Fig. 4D (one of three directions parallel to the sides of a hexagon constituting the honeycomb pattern and a direction other than the vertical direction in the drawing) may be regarded as the main axis direction ML A direction indicated by a dashed-dotted line arrow in Fig. 4C or Fig. 4D (a direction in which hexagons constituting the honeycomb pattern are arrayed) may be regarded as the main axis direction ML.

In addition, in a case where the image 37 is an image in which circles are arrayed as shown in Fig. 4E or Fig. 4F (a square array in Fig. 4E and a hexagonal array in Fig. 4F), in the present embodiment, among the array directions of the circles, the vertical direction in Fig. 4E and Fig. 4F (a direction indicated by a solid line arrow in Fig. 4E or Fig. 4F) is regarded as the main axis direction ML Among the array directions of the circles, a direction other than the vertical direction (a direction indicated by a broken line arrow in Fig. 4E or Fig. 4F) may be regarded as the main axis direction ML In addition, in Fig. 4E and Fig. 4F, an example in which circles are arrayed has been described, but the description is still true even in a case where a pattern other than a circle such as a triangle or a quadrangle is arrayed.

As described above, the image 37 formed on the print layer 35 is an image in which the main axis direction ML can be recognized as the directionality of the image. The main axis direction ML of the image 37 is a straight line shape in a state in which the image 37 is a plane as described above, that is, a state in which the modeled article 39 before shaping is made into a plane; however, in the decorative member 10 obtained by shaping the modeled article 39, the main axis direction ML of the image 37 also deforms (curves) in accordance with the deformation of the modeled article 39. In addition, the image 37 is viewed through the lenses 32 deformed, similar to the main axis direction ML, in accordance with the deformation of the modeled article 39.

Here, as described above, the lenses 32 are long in the extension direction ED and arrayed in the array direction LD, but the inventors found that the appearance of the image 37 differs depending on a formed angle θ between the direction of the lenses 32 (extension direction ED) and the main axis direction ML of the image 37.

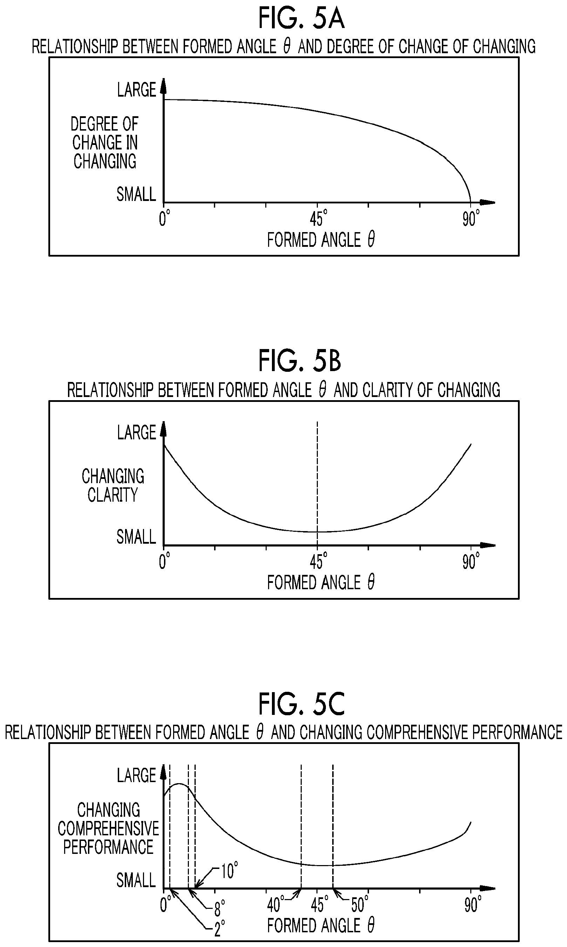

Specifically, as shown in Fig. 5A, in a state in which the modeled article 39 is deformed in a three-dimensional shape like the decorative member 10, a case where the formed angle θ between the extension direction ED and the main axis direction ML is 0° is set as a standard. Here, as the formed angle θ between the extension direction ED and the main axis direction ML increases (as the angle approaches 90° from 0°), the image being viewed is felt to change (changing) in a case where the line of sight moves even if only slightly, and the amount of the image position being viewed changed relative to the amount of the line of sight moved increases. In other words, it was found that the degree of change of the changing of the image can be said to be largest in a case where the angle is 0° and, as the angle approaches 90°, the degree of change of the changing of the image becomes smaller than that in a case where the angle is 0°.

In addition, it was found that, as shown in Fig. 5B, in a state in which the modeled article 39 has a planar shape before deformation, as the formed angle θ between the extension direction ED and the main axis direction ML gets away from 45° (as the angle approaches 0° from 45° or approaches 90° from 45°), boundary parts (boundary parts between striped regions in a stripe pattern) and the like in the image are more clearly recognized (the clarity of the changing of the image is high) and the image is viewed in a clearer aspect. In contrast, it was found that, as the formed angle θ between the extension direction ED and the main axis direction ML approaches 45° (as the angle approaches 45° from 0° or approaches 45° from 90°), the boundary parts in the image becomes unclear (the clarity of the changing of the image is low) and the image is viewed in a complicated aspect.

Furthermore, as shown in Fig. 5C, as a result of verifying the quality (comprehensive changing performance) of the look in a decorative member 10 state in consideration of the two effects described in Fig. 5A and Fig. 5C, it was found that the quality is poor (the comprehensive changing performance is poor) in a case where the formed angle θ between the extension direction ED and the main axis direction ML is 40°<θ<50° and the degradation of the quality can be prevented in a case where the angle is outside the above-described range, that is, 0°≤θ≤40° or 50°≤θ≤90°.

In addition, it was found that, as the angle gets away from the range of 40°<θ<50°, the quality further improves, and, furthermore, the degree of improvement in the quality in a case where the angle gets away from the range of 40°<θ<50° is larger in a case where the angle is 0°≤θ≤40° than a case where the angle is 50°≤θ≤90°.

Furthermore, it was found that, even in the range of 0°≤θ≤40°, the quality is favorable in a range of 0°≤θ≤10° compared with other ranges and, particularly, the quality becomes more favorable in a range of 2°≤θ≤8° compared with other ranges.

Therefore, in the present embodiment, the decorative member 10 is constituted such that the formed angle θ between the extension direction ED of the lenses and the main axis direction ML of the image satisfies 0°≤θ≤40° or 50°≤θ≤90°. The formed angle θ between the extension direction ED of the lenses and the main axis direction ML of the image is preferably 0°≤θ≤40°, more preferably 0°≤θ≤10°, and still more preferably 2°≤θ≤8°.

This effect of the formed angle between the extension direction of the lenses and the main axis direction of the image can also be sufficiently obtained even in the case of taking the appearance of light in a three-dimensional shape having a curved surface described below into account, and it is possible to provide a three-dimensional modeled article having excellent designability.

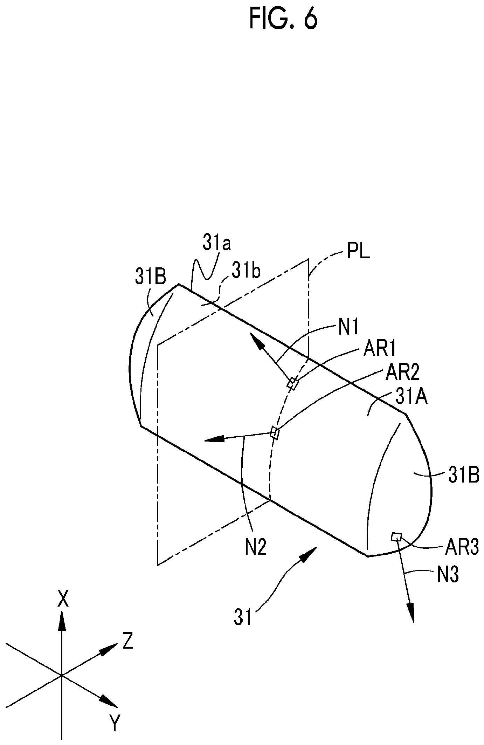

The curved surfaces of the first sheet surface 31a and the second sheet surface 31b of the sheet 31 will be described with reference to Fig. 6. The first sheet surface 31a and the second sheet surface 31b have the same shape, and thus the first sheet surface 31a will be described in detail, and the second sheet surface 31b will not be described. In the sheet 31, as shown in Fig. 6, a front surface part 31A that is a constituent member of the front surface part 10A (refer to Fig. 1) of the decorative member 10 and side surface part 31B that are constituent members of the side surface parts 10B (refer to Fig. 1) are integrally formed. The first sheet surface 31a has three regions having different normal directions and is formed as a curved surface in which one of the normal directions of the respective regions is inclined with respect to a plane including the other two normal directions. The above-described first sheet surface will be specifically described below.

Two random regions of the front surface part 31A on the first sheet surface 31a are considered as a first region AR1 and a second region AR2, and a random region of the side surface part 31B on the first sheet surface 31a is considered as a third region AR3. In Fig. 6, the first region AR1 and the second region AR2 are on an XZ plane, but are not limited thereto. In a case where a normal line from the first region AR1 is considered as a first normal line N1, a normal line from the second region AR2 is considered as a second normal line N2, and a normal line from the third region is considered as a third normal line N3, a plane PL including a direction of the first normal line N1 and a direction of the second normal line N2 is imagined. As described above, the plane PL is a plane including two "directions". Therefore, in a case where the two straight lines (the first normal line N1 and the second normal line N2) are not in a twisted position, the plane PL is the same plane as a plane including the two straight lines. On the other hand, in a case where two straight lines are in a twisted position, a plane including these two straight lines cannot be imagined, but a plane including the "directions" of these two straight lines can be imagined, and this plane (the plane including the "directions" of two straight lines that are in a twisted position) is imagined as the plane PL. That is, the plane PL is not defined as a plane including two straight lines, but is defined as a plane including the "directions" of two straight lines, and thus, even in a case where the first normal line N1 and the second normal line N2 are in a twisted position, the plane PL is imagined. In addition, a direction of the third normal line N3 is inclined with respect to the plane PL. The first region AR1 and the second region AR2 may be on the side surface part 31B, and the third region AR3 may be on the front surface part 31A. In addition, the first region AR1 and the third region AR3 may be on the front surface part 31A, and the second region AR2 may be on the side surface part 31B. This is also true for the second sheet surface 31b.

Therefore, the sheet 31 having the first sheet surface 31a and the second sheet surface 31b is curved in the extension direction ED of the lenses 23 and the array direction LD of the plurality of lenses 23. In addition, the lens part 32 (refer to Fig. 3) and the image-forming part 33 (refer to Fig. 3) are respectively provided so as to curve along the above-described curved surface, and thus the decorative member 10 (refer to Fig. 3) also has a shape curved in the extension direction ED of the lenses 23 and the array direction LD of the plurality of lenses 23.

Therefore, even in a case where the observation point does not change, the image 37 on the print layer 35 is observed in a variable aspect having unevenness in reflected light, and, in a case where the observation point moves, the above-described unevenness in reflected light is observed in association with a change in the position, and thus the image 37 on the print layer 35 is observed in a more complex and variable aspect, and thus the designability can be improved.

More specifically, the decorative member 10 (image-forming part 33,) has a shape curved in the extension direction ED of the lens 23 and in the array direction LD of the plurality of lenses 23, and thus the image 37 on the print layer 35 is observed as an image having unevenness in reflected light and, for example, is observed to have a color shading and/or a brightness difference. For example, in a case where the image 37 for a variable view is formed, an image being observed is switched due to the movement of the observation point, and, in the image after the switching, a change is imparted to the appearance of light. Therefore, during the movement of the observation point, the appearance of light varies depending on parts in the decorative member 10, and the switching timing also varies depending on the parts, and thus an image being observed is observed as, for example, a pattern that is more variable than in a case where the image-forming layer is present in a flat lenticular sheet or prism sheet of the related art and a case where the sheet is simply rolled. As a result, the designability enhances, and a highly decorative interior is obtained. Furthermore, the decorative member 10 has the same curved shape as in the sheet 31 having the first sheet surface 31a and the second sheet surface 31b consisting of the above-described curved surface. Therefore, in the decorative member 10, the movement direction of the observation point at which the switching of the image 37 for a variable view from one state to another state is recognized is not only the array direction LD, and a plurality of movement directions is present. Therefore, in addition to the observation point that is originally set, observation points at which the switching of images by the movement is recognized develop.

As described above, the decorative member 10 curves in the array direction LD of the lenses 23 and/or the extension direction ED, and thus the appearance of light at one random first observation point becomes more complicated, additionally, the appearance of an image which is recognized as light by the movement of the observation point also becomes more complicated, and the designability further enhances.

The curvature radii of the first sheet surface 31a and the second sheet surface 31b are preferably 50 mm or more and 500 mm or less. In a case where the curvature radii are in this range, it is possible to sufficiently obtain the effect of the lenses 23 while preventing the flickering of the image 37 on the print layer 35 and further improve the designability. In addition, the curvature radii of the first sheet surface 31a and the second sheet surface 31b are more preferably 60 mm or more and 400 mm or less. In such a case, the above-described effect becomes more significant.

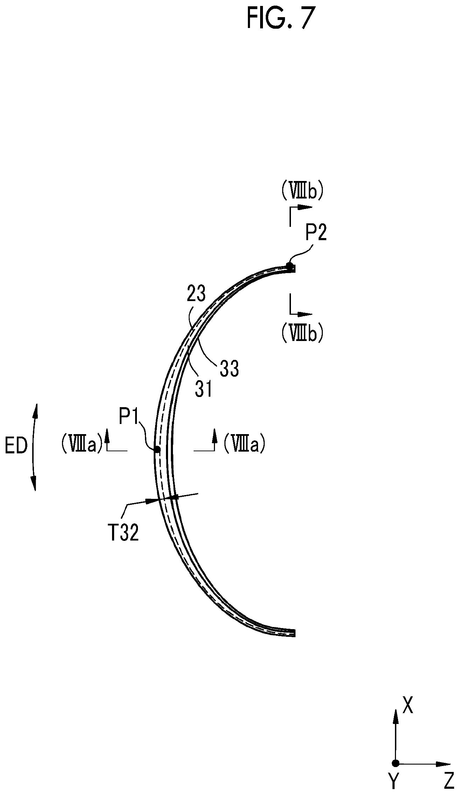

The curvature of the sheet 31 preferably changes along the extension direction ED of the lenses 23. In the present embodiment, the curvature of the sheet 31 changes along the extension direction ED of one random lens 23 on the front surface part 10A. Therefore, the curvature of the front surface part 10A also changes along the extension direction ED of the lenses 23. For example, in Fig. 7, the curvatures of the sheet 31 and the front surface part 10A continue to gradually increase from the center toward the upper side and the lower side in the vertical direction X. Therefore, the appearance of light by the movement of the observation point becomes more complicated, and the designability further enhances. In Fig. 7, in order to prevent the drawing from becoming complicated, a hatching indicating a cross section is not provided.

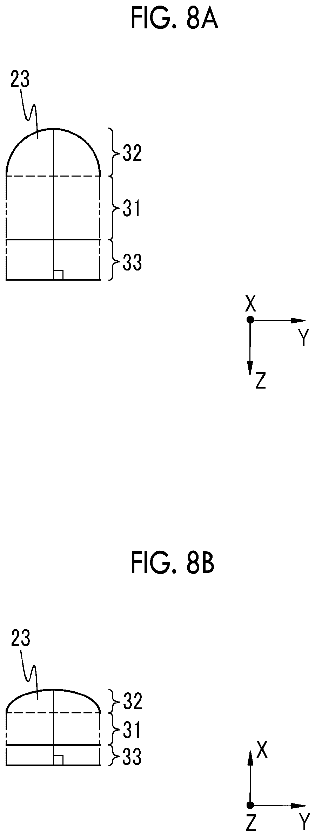

In addition, as shown in Fig. 7, the lens part 32 on the front surface part 10A preferably includes a plurality of lenses 23 having cross-sectional shapes that are different at a first position and a second position in the extension direction ED. Here, the center in the vertical direction X in Fig. 7 is considered as the first position PI, and the upper side end part is considered as the second position P2. In the case of comparing the cross section (refer to Fig. 8A) at the first position P1 with the cross section (refer to Fig. 8B) at the second position P2, the width of the lens 23 remains almost identical, but the height is higher, and the cross-sectional shape is a more, substantially, semicircular shape. The lens 23 at the second position P2 has a collapsed semicircular shape as shown in Fig. 8B. The cross-sectional shape of the lens 23 continuously changes from the first position P1 toward the second position P2. There is a case where the respective cross sections at the first position P1 and the second position P2 are switched depending on conditions for producing the decorative member 10 by a heat process described below.

A thickness T32 of the lens part 32 (refer to Fig. 3) preferably changes along the extension direction ED of the lenses 23, and, in the present embodiment, the thickness changes that way. As shown in Fig. 7, the thickness T32 of the lens part 32 continues to gradually decrease upward and downward respectively from the center in the vertical direction X.

As described above, the lens part 32 has the lenses 23 having cross-sectional shapes that are different at the first position P1 and the second position P2 in the extension direction ED, and/or the thickness T32 changes along the extension direction ED of the lens 23, and thus the appearance of light becomes more complicated, and the designability enhances more reliably. For example, in a case where the observation point is a position facing the first position PI, and a focal position that is observed from the observation point is on the interface between the sheet 31 and the image-forming part 33 in the first position PI, the outline, tint, and/or the like of an image at the first position P1 are clearly observed, and the outline, tint, and/or the like of an image at the second position P2 are less clearly observed than those of the image at the first position P1. In addition, according to this example, the cross-sectional shapes of the lenses 23 continuously change from the first position P1 toward the second position P2. Therefore, the definitions continuously change from the first position P1 toward the second position P2. Therefore, the curved shape of the decorative member 10 works more reliably, and a sense of perspective (a sense of depth or a sense of three-dimensions) observed from one random observation point is more reliably felt. In addition, during the movement of the observation point, in association with the sense of perspective (the sense of depth or the sense of three-dimensions), a sense of a motion picture or a sense of a residual image is emphasized or a change in tone becomes complicated, whereby the designability enhances. Furthermore, in an environment of a low light intensity, for example, at night, the texture can be felt, and thus the designability enhances.

In addition, even in a case where the observation point is a position facing the second position P2 and the focal position in the case of being observed at the observation point is present on the interface between the sheet 31 and the image-forming part 33 in the second position P2, the same effect as in a case where the observation point is a position facing the first position P1 and the focal position in the case of being observed at the observation point is present on the interface between the sheet 31 and the image-forming part 33 in the first position P1 can be obtained.

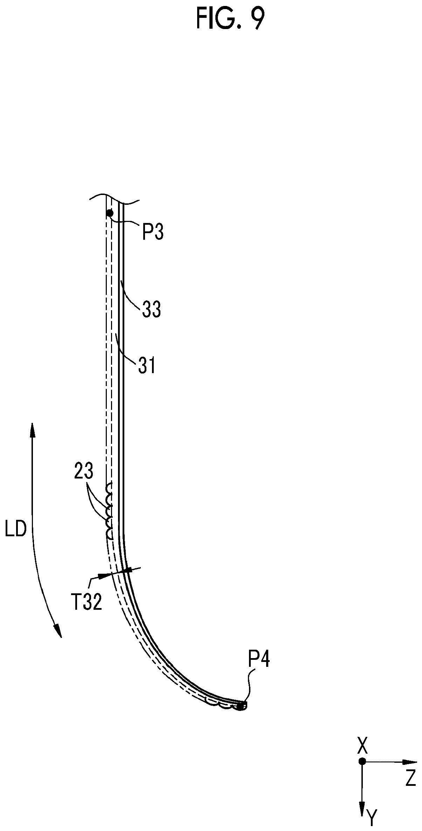

The curvature of the sheet 31 preferably changes along the array direction LD of the plurality of lenses 23, and, in the present embodiment, the curvature changes that way. Therefore, as shown in Fig. 9, the curvature of the decorative member 10 also changes along the array direction LD of the plurality of lenses 23 as a whole. The decorative member 10 of this example is symmetric with respect to the center in the right and left direction Y, and thus, in Fig. 9, only the right half in the right and left direction Y is shown. As shown in Fig. 9, the curvatures of the sheet 31 and the decorative member 10 continue to gradually increase from the center toward an end part in the right and left direction Y. Therefore, the appearance of light by the movement of a view becomes more complicated, and the designability further enhances. In Fig. 9, in order to prevent the drawing from becoming complicated, a hatching indicating a cross section is not provided.

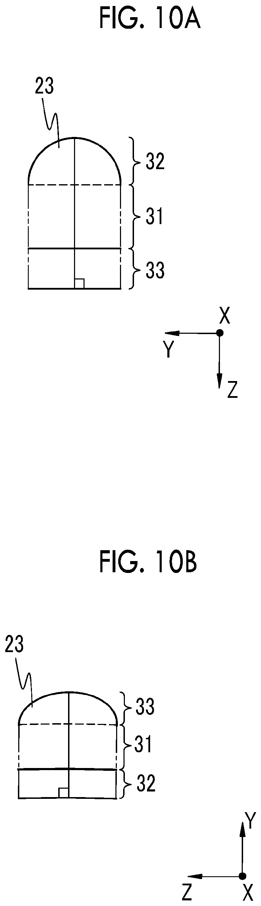

In addition, in the lens part 32, the shape of the cross section of the lens 23 at a third position and the shape of the cross section of the lens 23 at a fourth position in the array direction LD of the plurality of lenses 23 are preferably different from each other as shown in Fig. 9. Here, the center in the right and left direction Y in Fig. 9 is considered as the third position P3, and the fourth position P4 is provided at a lower side end part. In a case where the cross section of the lens 23 at the third position P3 (refer to Fig. 10A) is compared with the cross section of the lens 23 at the fourth position P4 (refer to Fig. 10B), the width of the lens 23 becomes smaller, and a shape having a higher height is formed. In addition, the shape of the cross section of the lens 23 continuously changes from the third position P3 toward the fourth position P4. There is a case where the shapes of the respective cross sections at the third position P3 and the fourth position P4 are switched depending on the conditions for producing the decorative member 10 by thermal shaping described below.

The thickness T32 of the lens part 32 (refer to Fig. 3) preferably changes along the array direction LD of the plurality of lenses 23, and, in the present embodiment, the thickness changes that way. As shown in Fig. 9, the thickness T32 of the lens part 32 continues to gradually decrease from the center in the right and left direction Y toward an end part.

As described above, the lens part 32 has the plurality of lenses 23 having mutually different shapes in the cross section at the third position P3 and the fourth position P4 in the array direction LD, and/or the thickness T32 changes along the array direction LD of the plurality of lenses 23, and thus, similar to the case of the extension direction ED, the appearance of light becomes more complicated, and the designability enhances more reliably.

The decorative member 10 can be produced from the modeled article 39 which has the same layer structure and is made into a planar sheet (refer to Fig. 11). The same layer structure refers to a structure comprising a sheet having a light-transmitting property (not shown), a lens part that is provided on one sheet surface of the sheet and is formed of protruding lenses (not shown), and an image-forming part which is provided on the other sheet surface of the sheet and on which an image is formed. However, the thickness of the lens part and the shapes of the plurality of lenses do not need to vary as in the decorative member 10 and may be uniform respectively. In addition, all of the lenses each may have a constant cross-sectional shape in the extension direction ED.

The respective materials of the sheet and the image-forming part of the modeled article 39 are the same as the respective materials of the sheet 31 and the image-forming part 33. The lens part includes a thermosetting compound that generates the above-described thermosetting polymer by heating and/or the above-described photocurable polymer. In addition, the thermosetting compound is in a so-called semi-cured state in which the thermosetting compound is not fully cured. Examples of the thermosetting compound include tricyclodecane dimethanol diacrylate (hereinafter, referred to as ADCP), bisphenol A (hereinafter, referred to as Bis-A), and a phenolic resin, and, in the present embodiment, ADCP is used.

A method for producing the decorative member 10 will be described below. The decorative member 10 is produced by a modeled article-producing step of producing the modeled article 39 and a shaping step of shaping the modeled article 39 into the decorative member 10. As shown in Fig. 11, a modeled article-producing device 40 for producing the modeled article 39 is constituted of a sender 41, a coater 42, a lens-forming unit 45, a winder 46, and the like.

The sender 41 is a member for supplying a film 51 in which a long and light-transmitting sheet member that serves as a sheet of the modeled article 39 and a forming member that serves as an image-forming part are laminated together in the thickness direction to the lens-forming unit 45. In this example, the film 51 is in a state of being wound in a roll shape, the film roll (not shown) having the film 51 wound in a roll shape is set in the sender 41, and the film 51 is sent from this film roll. The film 51 functions as a support for a coated film 52 which will be formed using the coater 42. A driving roller (not shown) that rotates in the circumferential direction is disposed between the lens-forming unit 45 and the winder 46. The film 51 is wound around this driving roller, and the film 51 is transported downstream of the modeled article-producing device 40 by the rotation of the driving roller.

The coater 42 is a member for forming the coated film 52 on the film 51. The coated film 52 is turned into a lens part in the modeled article 39 using the lens-forming unit 45. The coater 42 continuously outpours a coating fluid 53 being supplied. The coating fluid 53 is outpoured toward the film 51 that travels in the longitudinal direction, and thus the coated film 52 is formed on one film surface of the film 51. The film 51 on which the coated film 52 is formed is guided to the lens-forming unit 45.

The coating fluid 53 includes a thermosetting compound. In the present embodiment, this thermosetting compound is heated using a heater 57 described below, thereby generating the thermosetting compound that is included in the lens part in the modeled article 39. In the present embodiment, the modeled article 39 including a photocurable polymer in the lens part is produced, and thus a photocurable compound is also included in the coating fluid 53. The photocurable compound in the present embodiment is ADCP described above, but is not limited thereto, and may be any one of a monomer, an oligomer, or a polymer. Depending on the thermosetting compound and the photocurable compound to be used, the coating fluid 53 may include solvents therefor.

The lens-forming unit 45 is a member for forming (imparting a form) the respective lenses in the modeled article 39. The lens-forming unit 45 is constituted of a form-imparting machine 56, the heater 57, a light source 58, and the like.

The form-imparting machine 56 is a member for forming a protruding lens. The form-imparting machine 56 comprises a first support roller 61, a second support roller 62, and a shape-imparting roller 63 as a shape-imparting member. The first support roller 61, the second support roller 62, and the shape-imparting roller 63 are disposed in a state in which the rotation axes are set along the width direction of the film 51. From the upstream side, the first support roller 61, the shape-imparting roller 63, and the second support roller 62 are disposed.

In this example, the first support roller 61 and the second support roller 62 are disposed on a side of the transportation path of the film 51 opposite to the coated film 52, and the film 51 is wound around the circumferential surfaces thereof. The first support roller 61 and the second support roller 62 rotate in association with the transportation of the film 51. The first support roller 61 and the second support roller 62 may be rotated using a motor in synchronization with the transportation of the film 51.

The shape-imparting roller 63 is provided in a state in which the first support roller 61 and the second support roller 62 face each other and is disposed on the coated film 52 side of the transportation path of the film 51. The shape-imparting roller 63 continuously forms the lens part having the lens surfaces that protrude in a semicircular columnar shape in the coated film 52 in synchronization with the first support roller 61 and the second support roller 62. That is, the first support roller 61 and the second support roller 62 function as a support member that supports the film 51 and also functions as a shape-imparting member for forming the protruding lens surface.

On the circumferential surface of the shape-imparting roller 63, a plurality of concave parts 63a having a semicircular columnar shape cross section is formed in order to form the lens part. The respective concave parts 63a extend in the axial direction of the shape-imparting roller 63, that is, the width direction of the film 51, and the plurality of concave parts 63a is formed side by side along the circumferential direction of the shape-imparting roller 63. The shape-imparting roller 63 is rotated using a motor 66 in a state in which the film 51 is sandwiched between the first support roller 61 and the shape-imparting roller or between the second support roller 62 and the shape-imparting roller respectively. The rotation direction of the shape-imparting roller 63 is the direction in which the film 51 is transported (the counterclockwise direction in Fig. 11). The shape-imparting roller 63 presses the film 51 being transported from the coated film 52 side on the first support roller 61, on the second support roller 62, and between the first support roller 61 and the second support roller 62 respectively so as to transfer the shape of the concave part 63a to the coated film 52 and forms the lens part. The respective concave parts 63a extend in the circumferential direction of the shape-imparting roller, that is, the longitudinal direction of the film 51, and the plurality of concave parts 63a may also be formed side by side in the axial direction of the shape-imparting roller. The shape of the concave part 63a in the shape-imparting roller 63 is determined depending on the shape of a lens to be formed.

In the shape-imparting roller 63, a pressure adjuster 67 is preferably provided as in the present embodiment. The pressure adjuster 67 is a member for adjusting the pressing force of the shape-imparting roller 63 to the coated film 52 during the transfer of the shape of the concave part 63a. The pressure adjuster 67 adjusts the pressing force, thereby more reliably forming the lens part.

The heater 57 cures the thermosetting compound in the formed lens part, but puts the thermosetting compound into a semi-cured state so that the thermosetting compound can be further cured in the following steps. The heater 57 is disposed so as to surround a transportation path downstream of the form-imparting machine 56 and supplies heated gas, for example, an air to the inside. The thermosetting compound in the lens part formed using the form-imparting machine 56 is passed through the heater 57, whereby the curing of the thermosetting compound progresses. The presence or absence of the residue of the thermosetting compound and the residual percentage can be confirmed and quantitatively determined by comparing those before curing and after curing through a spectrum analysis of Fourier transform infrared spectrometer (FT-IR). In the present embodiment, the peak intensities at 810 cm⁻¹ and 1,635 cm⁻¹ before curing and after curing are compared with each other respectively, thereby confirming and quantitatively determining the presence and absence of the remaining of the thermosetting compound and the remaining percentage. The peak at 810 cm⁻¹ corresponds to the C-H (a single bond between carbon and hydrogen) out-of-plane bending vibration of a vinyl group, and the peak at 1,635 cm⁻¹ corresponds to the C=C (a double bond between carbon and carbon) stretching vibration of a vinyl group.

The internal temperature of the heater 57 and the time for passing the thermosetting compound through the heater 57 are adjusted depending on the kind of the thermosetting compound being used, thereby adjusting the residual amount or residual percentage of the thermosetting compound. The internal temperature of the heater 57, that is, the temperature of gas that is sent into the inside is preferably in a range of 100°C or higher and 200°C or lower and, in the present embodiment, set to 160°C. The time for passing the thermosetting compound through the heater 57, that is, the heating treatment time is preferably in a range of 10 seconds or longer and 200 seconds or shorter and, in the present embodiment, set to 30 seconds. Therefore, in the present embodiment, the modeled article 39 is obtained in a state in which the first thermosetting compound is included.

At least any one of the heater 57 or, for example, a variety of heating devices such as a radiation-type heater (not shown) and/or a blower (not shown) that sends heated gas may be used. In addition to the heater 57 provided downstream of the form-imparting machine 56, a variety of heating devices as described above may be provided at a position facing the first support roller 61 upstream of the shape-imparting roller 63, a position on the film 51 side facing the shape-imparting roller 63, a position facing the second support roller 62 downstream of the shape-imparting roller 63, and the like. In a case where a variety of heating devices as described above are provided at any of the above-described positions, the heater 57 provided downstream of the form-imparting machine 56 may not be used.

The light source 58 is a member for curing the photocurable compound and generating a photocurable polymer. The light source 58 is provided in a state of facing the shape-imparting roller 63 and ejects ultraviolet rays. During the passing of the film 51 in a state of being wound around the shape-imparting roller 63, light from the light source 58 is radiated on the coated film 52 through the film 51, and the photocurable compound cures, thereby generating a photocurable polymer.

The kind of light ejected by the light source 58 and the output at which light is ejected depend on the kind of the photocurable compound. The light source 58 and/or other light sources (not shown) may be provided. In a case where other light sources are used in addition to the light source 58, other light sources can be provided at a position facing the first support roller 61 upstream of the shape-imparting roller 63, a position on the film 51 side facing the shape-imparting roller 63, a position facing the second support roller 62 downstream of the shape-imparting roller 63, and the like.

The winder 46 winds the obtained long modeled article 39 around a winding core (not shown) in a roll shape. The modeled article 39 in a roll shape is cut to a sheet shape using a cutter before being provided to a shaping device 70 described below. Therefore, in the modeled article-producing device 40, a cutter (not shown) that cuts the long modeled article 39 to a sheet shape may be provided at the position of the winder 46 instead of using the winder 46. In addition, in the case of producing a modeled article not comprising the sheet, a peeler (not shown) that peels the sheet part off from a portion of the lens part may be provided between the lens-forming unit 45 and the winder 46, thereby peeling the portion of the sheet part. In this example, the shape-imparting roller 63 is used as the shape-imparting member, but the shape-imparting member is not limited thereto. For example, in the case of producing a sheet-type modeled article or the like, for example, a plate-shaped shape-imparting member having the concave parts 63a formed on the surface may be used.

The shaping device 70 illustrated in Fig. 12 is a member for shaping the sheet-shaped modeled article 39 and producing the decorative member 10. The shaping device 70 comprises a die unit 72, a moving mechanism 73, a heater 74, and a control part 76 and carries out a thermal shaping treatment under heating. However, the shaping method is not limited to thermal shaping, and, for example, a method such as vacuum shaping or vacuum pressure shaping may be used.

The die unit 72 has a first die 77, a second die 78, and a trunk 79. The trunk 79 has a rectangular cross-sectional shape in a direction orthogonal to a compression direction. The trunk 79 has a guide hole 79a that penetrates in the compression direction by the first die 77 and the second die 78. Meanwhile, the compression direction refers to the vertical direction in Fig. 12. The first die 77 and the second die 78 are guided to the inner wall of the guide hole 79a and are movable in the compression direction. The first die 77 and the second die 78 carry out the compression shaping of the modeled article 39 in the trunk 79 and thus shape the decorative member 10. The modeled article 39 is formed in a shape suitable to the compression shaping of the decorative member 10.

In the first die 77 and the second die 78, transfer surfaces 77a and 78a for forming a second lens surface 11B and a first lens surface 11A having the curved shape of the decorative member 10 respectively are formed on facing surfaces that face each other. The transfer surface 77a of the first die 77 is formed in a convex form, and the transfer surface 78a of the second die 78 is formed in a concave form.

The moving mechanism 73 moves the first die 77 and the second die 78 respectively in a direction in which the distance therebetween increases and decreases. In addition, in a case where the modeled article 39 is stored in the trunk 79, the first die 77 is moved upwards, thereby being evacuated from the trunk 79. The heater 74 heats the die unit 72, thereby heating the modeled article 39 in the trunk 79. The moving mechanism 73 and the heater 74 are controlled using the control part 76. The control part 76 controls the amount of heat generated from the heater 74, thereby adjusting the temperature in the trunk 79.

The decorative member 10 is an example of a three-dimensional modeled article having a curved shape protruding in one direction, but may be a three-dimensional modeled article having a shape curved in a plurality of directions. That is, the modeled article 39 can also be shaped into a three-dimensional modeled article having a shape curved in a plurality of directions, and, in order for that, the die unit 72 in the shaping device 70 needs to be replaced by a die unit tailored to the curved shape of a target three-dimensional modeled article.

### [Examples and Comparative Examples]

Modeled articles 39 were made using the modeled article-producing device 40. Decorative members 10 were produced respectively using the shaping device 70 from the respective modeled articles 39 obtained. The pitches between lenses differed from each other among the modeled articles 39, and decorative members 10 were made using the respective modeled articles 39 having a pitch between lenses of 80 LPI, 100 LPI, 200 LPI, or 300 LPI. In the case of turning the respective modeled articles 39 into the decorative members 10, the stretching percentages of parts that were most stretched in the array direction LD were 100%. The curvature radii of a first sheet surface 31a and a second sheet surface 31b of the decorative member 10 were in a range of 60 mm or more and 400 mm or less. As the image type of the image 37 on the decorative member 10, the above-mentioned stripe pattern, carbon pattern, or honeycomb pattern was used, and the formed angle between the extension direction orthogonal to the array direction in which the lenses are arrayed and the main axis direction of the image was approximately adjusted, thereby producing each decorative member 10.

For the respective decorative members 10 obtained in the examples and the comparative examples, the designability was evaluated.

The decorative member 10 with a stripe pattern obtained in the example was observed while moving the view from distances of 50 centimeters and two meters.

In a case where the formed angle θ between the extension direction orthogonal to the array direction in which the lenses were arrayed and the main axis direction of the image was 0°, the quality (comprehensive changing performance) was extremely favorable, and the designability was excellent.

In a case where the formed angle θ was 5°, a slight change such as a sense of a motion picture was felt due to a slight difference in angle compared with a case where the angle θ is 0°, and the quality (comprehensive changing performance) could be recognized higher, and the designability was also excellent.

In a case where the formed angle θ was in a range of 30° to 40°, as θ increased, the amount of the image position being viewed changed relative to the amount of the line of sight moved became smaller, and the clarity of the changing of the image was also recognized poor.

In a case where the formed angle θ was 45° (a range from more than 40° to less than 50°, comparative example), compared with a case where the formed angle θ was 0°≤θ≤40° or 50°≤θ≤90°, particularly, the smoothness of the boundary part of the image (the clarity of the changing of the image) was felt low, the image was viewed in a more complicated aspect, and the designability was poor.

In the formed angle θ was 60° and 75° (a range of 50° to 90°), as θ increased, the quality (comprehensive changing performance) clearly improved compared with a case where the formed angle was in a range of more than 40° to less than 50°.

The same tendency was observed in a case where the image was a carbon pattern or a honeycomb pattern, and, in a case where the formed angle θ between the extension direction orthogonal to the array direction in which the lenses were arrayed and the main axis direction of the image was 0°≤θ≤40° or 50°≤θ≤90°, the decorative member 10 (three-dimensional modeled article) having favorable designability was obtained.

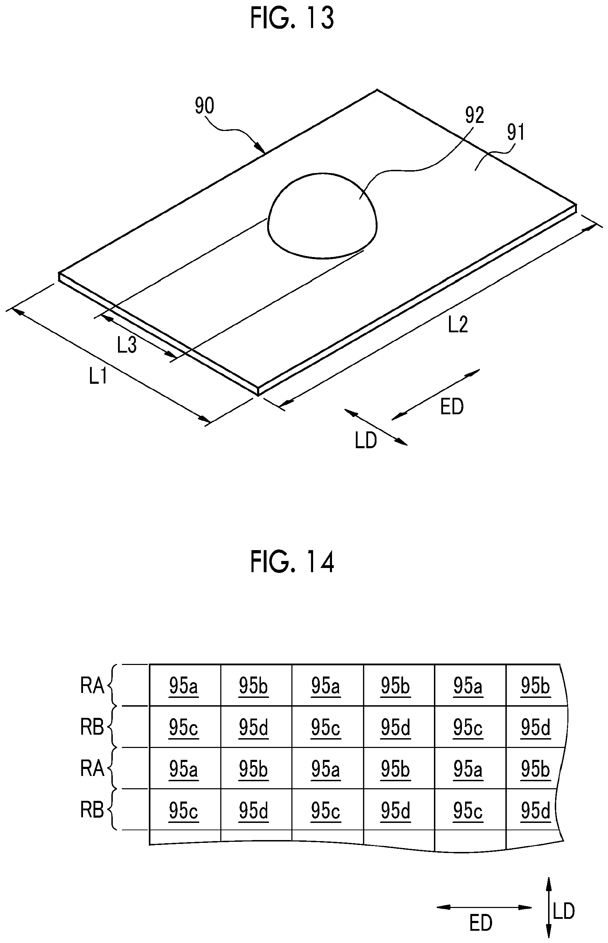

Hereinafter, on the basis of the above-described results, the action effects will be verified. A decorative member 90 illustrated in Fig. 13 is formed in a sheet shape and comprises a rectangular plane part 91 and a dome-shaped curved surface part 92 formed at the center of the plane part 91. A length L1 of a short side of the plane part 91 is 120 mm, and a length L2 of a long side is 150 mm. The curved surface part 92 is formed as a convex part that protrudes upwards in Fig. 13. The curved surface part 92 has a semispherical shape having a constant radius and has a diameter L3 of 40 mm.

The decorative member 90 is made by the thermal shaping of a rectangular sheet-shaped modeled article 39 having a length of a short side of 120 mm and a length of a long side of 150 mm. Therefore, the decorative member 90 has the same layer structure as the decorative member 10. However, an image that is formed on the print layer 35 is different from the image in the decorative member 10 as described below using a separate drawing. In Fig. 13, the lenses 23 (refer to Fig. 3) are not illustrated in order to prevent the drawing from becoming complicated, but the lens part 32 (refer to Fig. 3) is located on the upper side in Fig. 13, and the image-forming part 33 (refer to Fig. 3) is located on the lower side in Fig. 13. The array direction LD is a short side direction of the plane part 91, and the extension direction ED is a long side direction of the plane part 91.

The image that is formed on the print layer 35 in the decorative member 90 is constituted of four kinds of rectangular image areas (hereinafter, referred to as the rectangular image areas) 95a, 95b, 95c, and 95d as illustrated in Fig. 14. The rectangular image areas 95a, 95b, 95c, and 95d are squarely arrayed. The rectangular image areas 95a and the rectangular image areas 95b are alternately disposed in the extension direction ED, and, similarly, the rectangular image areas 95c and the rectangular image areas 95d are alternately disposed in the extension direction ED. In addition, the rectangular image areas 95a and the rectangular image areas 95c are alternately disposed in the array direction LD, and, similarly, the rectangular image areas 95b and the rectangular image areas 95d are alternately disposed in the array direction LD. In the following description, in the case of not being differentiated from each other, the rectangular image areas 95a, 95b, 95c, and 95d will be referred to as the rectangular image areas 95.

An image row RA consisting of the rectangular image areas 95a and the rectangular image areas 95b that are arrayed in the extension direction ED and an image row RB consisting of the rectangular image areas 95c and the rectangular image areas 95d are disposed so as to correspond a single lens 23 in a state of forming a pair.

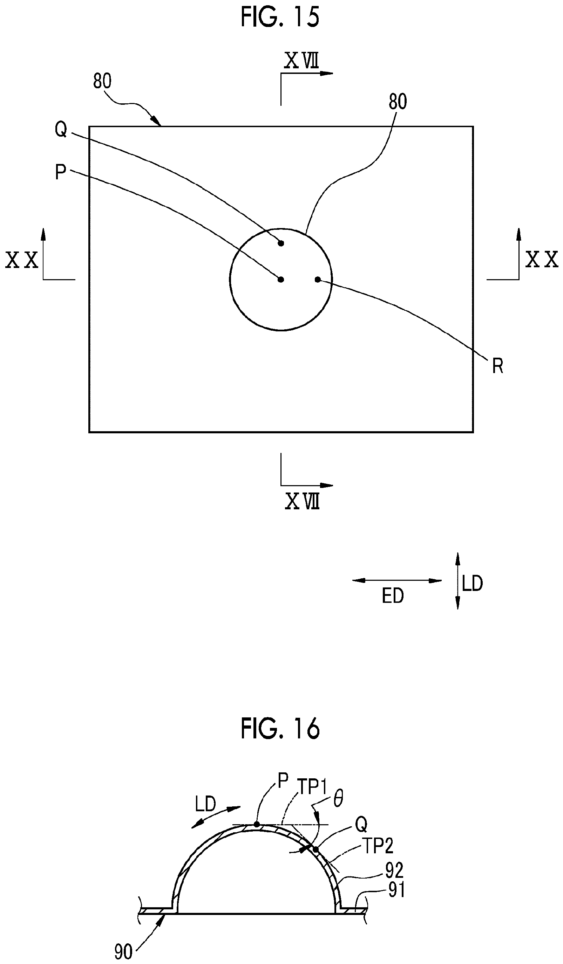

Here, in the case of seeing the decorative member 90 from the lens part 32 (refer to Fig. 3) side as illustrated in Fig. 15, the center of the curved surface part 92 is considered as a point P. In addition, in the curved surface part 92, a point Q is provided on a straight line that passes through the point P and extends in the array direction LD, and a point R is provided on a straight line that passes through the point P and extends in the extension direction ED.

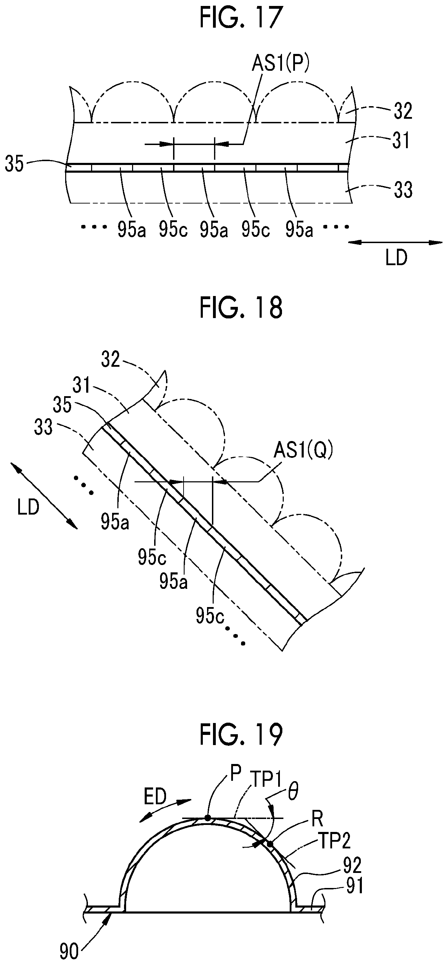

As illustrated in Fig. 16, in a case in which a tangent plane at the point P on the curved surface part 92 is considered as a first tangent plane TP1, the point Q is a contact point between a second tangent plane TP2 that forms an angle θ (here, 0°<θ≤90°) of 45° with the first tangent plane TP1 and the curved surface part 92. Similarly, the point R is also a contact point between the second tangent plane TP2 and the curved surface part 92 (refer to Fig. 19). As described above, the point Q and the point R are points on the curved surface part 92 at which the direction of the observation point is inclined 45° with respect to the normal line. The lens 23 is extremely smaller compared with the curved surface part 92, and thus the first tangent plane TP1 and the second tangent plane TP2 are specified on a curved surface (an imaginary curved surface obtained by connecting the apexes of the respective lenses 23 on the first lens surface) as the entire curved surface part 92 by ignoring a curved surface forming the first lens surface of the lenses 23.

The decorative member 90 is observed from 600 mm above the point P in Fig. 16. "600 mm" is a distance set as remoteness far enough to consider, in the case of seeing the point P and the point Q from one observation point, a straight line connecting the observation point and the point P and a straight line connecting the observation point and the point Q to be parallel to each other.

Here, the width of the rectangular image area 95 in the array direction LD which is expected to be observed from the observation point is considered as an expected width AS1. In the case of differentiating the expected width AS1 of the rectangular image area 95 at the point P and the expected width AS1 at the point Q, the former width is represented by AS1(P), and the latter width is represented by AS1(Q). As illustrated in Fig. 17, the rectangular image areas 95a, 95c, 95a, ... at the point P are considered to be arrayed in a direction perpendicular to the direction toward the observation point. In contrast, the rectangular image areas 95a, 95c, 95a, ... at the point Q are considered to be arrayed in a direction 45° inclined with respect to the array direction of the rectangular image areas 95a, 95c, 95a, ... at the point P as illustrated in Fig. 18. Therefore, each of the expected widths AS1(Q) of the rectangular image areas 95a, 95c, 95a, ... at the point Q is cos 45° times (=1/2^{1/2} times) each of the expected widths AS1(P) of the rectangular image areas 95a, 95c, 95a, ... at the point P and is narrower than the expected width AS1(P) at the point P (which is considered as an action A1). Meanwhile, in Fig. 17 and Fig. 18, the rectangular image areas 95a, 95c, 95a, ... are drawn and described, but the rectangular image areas 95b, 95d, 95b, ... may be drawn and described.

In addition, in the case of observing the point P and the point Q from the above-described observation point, the point P is observed from right above (a direction perpendicularly away from the rectangular image area 95), and the point Q is observed from above with a slope (a direction away from the rectangular image area 95 with a slope). Therefore, in the case of observing the point P, among the rectangular image areas 95, a point right below the point P (among the rectangular image areas 95, a point intersecting a perpendicular line from the point P and a point at which the optical axis of the lens 23 in the lens part 32 and the rectangular image area 95 intersect each other) is viewed. On the other hand, in the case of observing the point Q, a point deviating from right below the point Q is observed. Furthermore, the lens part 32 and the sheet 31 have refractive indexes that are different from that of the outside (the atmosphere filling a space in which the decorative member 90 is disposed), and thus, in the case of being observed from above with a slope such as the point Q, a position being observed also deviates due to the refraction of light by the lens part 32 and the sheet 31. As described above, from the point P, a point right below is observed; however, from the point Q, a point deviating from right below is observed (which is considered as an action A2).

Furthermore, in the case of moving the observation point along the array direction LD in the plane part 91, due to the difference between the expected width AS1(P) at the point P and the expected width AS1(Q) at the point Q, the cycle of the switching of images being observed differs at the point P and the point Q. Specifically, the cycle of the switching at the point Q is cos 45° times (=1/2^{1/2} times) the cycle of the switching at the point P and is shorter than the cycle of the switching at the point P (which is considered as an action A3).

The decorative member is also observed in the same manner in the extension direction ED. That is, the decorative member 90 is observed from 600 mm above the point P in Fig. 19. "600 mm" is a distance set as remoteness far enough to consider, in the case of seeing the point P and the point R from one observation point, a straight line connecting the observation point and the point P and a straight line connecting the observation point and the point R to be parallel to each other.

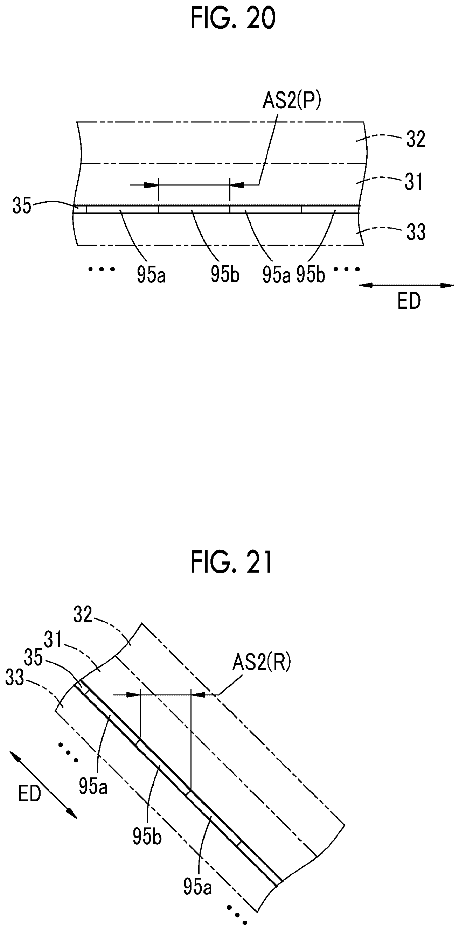

Here, the width of the rectangular image area 95 in the extension direction ED which is expected to be observed from the observation point is considered as an expected width AS2. In the case of differentiating the expected width AS2 of the rectangular image area 95 at the point P and the expected width AS2 at the point R, the former width is represented by AS2(P), and the latter width is represented by AS2(R). As illustrated in Fig. 20, the rectangular image areas 95a, 95b, 95a, ... at the point P are considered to be arrayed in a direction perpendicular to the direction toward the observation point. In contrast, the rectangular image areas 95a, 95b, 95a, ... at the point R are considered to be arrayed in a direction 45° inclined with respect to the array direction of the rectangular image areas 95a, 95b, 95a, ... at the point P as illustrated in Fig. 21. Therefore, each of the expected widths AS2(R) of the rectangular image areas 95a, 95b, 95a, at the point R is cos 45° times (=1/2^{1/2} times) each of the expected widths AS2(P) of the rectangular image areas 95a, 95b, 95a, ... at the point P and is narrower than the expected width AS2(P) at the point P (which is considered as an action B1). Meanwhile, in Fig. 20 and Fig. 21, the image row RA is drawn and described, but the image row RB may be drawn and described.

In addition, in the case of observing the point P and the point R from the above-described observation point, the point P is observed from right above, and the point R is observed from above with a slope. Therefore, in the case of observing the point P, among the rectangular image areas 95, a point right below the point P is viewed. On the other hand, in the case of observing the point R, a point deviating from right below the point R is observed. Furthermore, a position being observed also deviates due to the refraction of light by the lens part 32 and the sheet 31. As described above, from the point P, a point right below is observed; however, from the point R, a point deviating from right below is observed (which is considered as an action B2).

Due to the combination of the above-described actions A1 to A3, B1, and B2, in the decorative member 90, the appearance of light becomes complicated, and excellent designability is developed. The respective actions described above are identical in any case where an image being formed by the rectangular image areas 95a to 95d is an image for a variable view or an image for a three-dimensional view. In addition, in the decorative member 90, in a case where the thickness of the lens part 32 differs depending on positions and/or a case where the cross-sectional shape of the lens 23 differs depending on positions, in addition to the above-described actions A1 to A3, B1, and B2, the focal depth differs depending on positions due to the difference in the thickness and/or the cross-sectional shape, and thus the appearance of light becomes more variable.

In addition, as the pitch P23 between the lenses 23 and the width of the rectangular image area in the array direction LD decreases, the accuracy further improves, and the appearance of light becomes more variable.

In the present invention, in consideration of the above-described actions A1 to A3, B1, and B2 and the appearance of light attributed to the difference in focal depth depending on positions caused by the difference in thickness and/or cross-sectional shape, that is, the appearance of light attributed to shaping in a three-dimensional shape, the formed angle θ between the extension direction ED of the lenses and the main axis direction ML of the image is set, and the quality (comprehensive changing performance) of the look is improved.

That is, setting the formed angle θ between the extension direction ED of the lenses and the main axis direction ML of the image as in the present invention is particularly effective in a state where the lens is formed in a three-dimensional shape. Specifically, due to the above-described actions A1 to A3, B1, and B2 and the difference in focal depth depending on positions caused by the difference in thickness and/or cross-sectional shape, the appearance of light becomes more variable, the quality (comprehensive changing performance) of the look is improved, and the designability can be more effectively improved.

### Explanation of References

- 10, 90:: decorative member
- 10A:: front surface part
- 10B:: side surface part
- 11:: automobile
- 14:: dashboard
- 15:: steering wheel
- 16:: door panel
- 21:: dashboard material main body
- 22:: dashboard material
- 23:: lens
- 31:: sheet
- 31A:: front surface part
- 31B:: side surface part
- 31a:: first sheet surface
- 31b:: second sheet surface
- 32:: lens part
- 33:: image-forming part
- 35:: print layer
- 36:: support
- 37:: image
- 39:: modeled article
- 40:: modeled article-producing device
- 41:: sender
- 42:: coater
- 45:: lens-forming unit
- 46:: winder
- 51:: film
- 52:: coated film
- 53:: coating fluid
- 56:: form-imparting machine
- 57:: heater
- 58:: light source
- 61:: first support roller
- 62:: second support roller
- 63:: shape-imparting roller
- 63a:: concave part
- 66:: motor
- 67:: pressure adjuster
- 70:: shaping device
- 72:: die unit
- 73:: moving mechanism
- 74:: heater
- 76:: control part
- 77:: first die
- 77a:: transfer surface
- 78:: second die
- 78a:: transfer surface
- 79:: trunk
- 79a:: guide hole
- 91:: plane part
- 92:: curved surface part
- 95a to 95d:: rectangular image area
- AR1:: first region
- AR2:: second region
- AR3:: third region
- AS1(P), AS1(Q), AS2(P), AS2(R):: expected width
- L1:: length of short side
- L2:: length of long side
- L3:: diameter
- ED:: extension direction
- LD:: array direction
- N1:: first normal line
- N2:: second normal line
- N3:: third normal line
- P23:: pitch between lenses
- PL:: plane
- T10:: thickness of decorative member
- T21:: thickness of dashboard material main body
- T32:: thickness of lens part
- W23:: width of lens
- ML:: main axis direction
- θ:: formed angle between main axis direction and extension direction

## Claims

1. A three-dimensional modeled article comprising:
a light-transmitting sheet having a sheet surface formed as a curved surface;
a lens part that is provided on one sheet surface of the sheet so as to curve along the curved surface and has a plurality of protruding lenses disposed in parallel; and
an image-forming part which is provided on the other sheet surface of the sheet and on which an image having directionality in a main axis direction is formed,
wherein the curved surface has three regions having different normal directions and has a shape in which one of the normal directions of the respective regions is inclined with respect to a plane including the other two normal directions, and
a formed angle θ between an extension direction orthogonal to an array direction in which the lenses are arrayed and a main axis direction of the image is 0°≤θ≤40° or 50°≤θ≤90°.

2. The three-dimensional modeled article according to claim 1,
wherein the formed angle θ is 0°≤θ≤40°.

3. The three-dimensional modeled article according to claim 2,
wherein the formed angle θ is 2°≤θ≤8°.

4. The three-dimensional modeled article according to any one of claims 1 to 3,
wherein a minimum value of widths of the lenses is in a range of 0.084 mm or more and 0.3 mm or less.

5. The three-dimensional modeled article according to claim 4,
wherein the minimum value of the widths of the lenses is in a range of 0.127 mm or more and 0.254 mm or less.

6. The three-dimensional modeled article according to any one of claims 1 to 5,
wherein a curvature radius of the curved surface is 50 mm or more and 500 mm or less.

7. The three-dimensional modeled article according to any one of claims 1 to 6,
wherein a curvature radius of the curved surface is 60 mm or more and 400 mm or less.
